# EUROPEAN PATENT SPECIFICATION

(11) **EP 1 999 769 B1**
(45) Date of publication and mention of the grant of the patent: **23.05.2012**
(21) Application number: 07716143.8
(22) Date of filing: 27.03.2007
(51) Int. Cl.: H01H 9/00, H01H 3/42

(54) **A METHOD AND A DEVICE FOR TRANSMITTING ROTARY MOTION**
VERFAHREN UND VORRICHTUNG ZUR ÜBERTRAGUNG VON DREHBEWEGUNG
METHODE ET DISPOSITIF DE TRANSMISSION D'UN MOUVEMENT DE ROTATION

(30) Priority: 28.03.2006 SE 0600691
(43) Date of publication of application: 10.12.2008
(73) Proprietor: ABB Technology Ltd, 8050 Zürich (CH)
(72) Inventor: JOHANSSON, Martin, S-771 43 Ludvika (SE)
(86) International application number: PCT/SE2007/050187
(87) International publication number: WO 2007/111565

(56) References cited:
- DE-U- 1 945 256
- GB-A- 989 796
- GB-A- 1 241 232

## Description

### FIELD OF THE INVENTION

The present invention relates to a device for transmitting rotary motion, said device for transmitting rotary motion comprising a motion-transmitting member for transforming a driving body rotatable about an axis of rotation into rotary motion of a body driven about an axis of rotation.

The invention further relates to a use of the invented device, in which the driven body is adapted to operate contacts of a diverter switch or an on-load tap changer in a transformer.

Further, the invention relates to a method of driving a body.

### BACKGROUND ART

In certain applications, there is a need to achieve a short, powerful rotary motion in a definite direction. In certain cases; this can be quite unproblematic if the available drive source has a corresponding movement characteristic. However, this is not always the case. It may occur that the available drive source is of such a kind that it carries out rotary motion in one direction as well as in the other direction.

There are also situations where the drive source included does not immediately achieve a required powerful torque for the necessary short period. It may also occur that both of these imperfections occur simultaneously as far as the available drive source is concerned.

One example of such a situation is when operating a diverter switch in an on-load tap changer for controlling the voltage of a transformer. In this case, it may be advantageous that the operating movement always occurs in the same direction of rotation, and it should occur for a relatively short period of time. Usually, the drive source for such a diverter switch is in the form of the drive shaft that operates the selector switch, that is, the mechanism that sets the connections to new tap points in the winding of the transformer when a change of voltage is to take place. The drive shaft of the selector switch rotates in different directions in dependence on whether it is a question of increasing or reducing the voltage of the transformer.

From WO 89/08924, a motion-transmitting mechanism is previously known, which is able to transform a rotary motion in one or the other direction into a unidirectional movement while at the same time concentrating the rotary motion with respect to time. The unidirection of the movement takes place by a special design of the spring, and elements directly cooperating therewith, which accumulate the energy and concentrate the rotary motion.

From WO 2006/004527, a motion-transmitting mechanism is previously known, which transforms a rotary motion in one or the other direction into a unidirectional movement which via, inter alia, a gear-wheel mechanism and shafts, transfers the rotary motion into an energy-storing system in the form of a spring unit. When the spring unit with a locking device is released, motion is transferred to a final shaft. Both the selector and the diverter switch are surrounded by transformer oil.

SE 0501712-5 describes a motion-transmitting mechanism that transforms an alternating rotary motion into a unidirected rotary motion via a linear translatory motion. Also in this motion-transmitting mechanism, the rotary motion is transmitted to an energy-storing system in the form of a spring unit.

GB 989 796 A describes a device for transmitting rotary motion a body according to the preamble of claim 1.

According to a fist aspect of the present invention, is seeks to provide an improved device for transmitting a rotary motion as well as a mechanical energy-storing system connected thereto.

According to a second aspect the invention seeks to provide a improved use for transmission of a rotary motion.

According to a third aspect, the invention seeks to provide an improved method for transmitting a rotary motion.

### SUMMARY OF THE INVENTION

According to the first aspect of the invention, there is provided a device as specified in claim 1. Embodiments will be clear from the subsequent subclaims 2-10.

According to the second aspect of invention, a use of the device is there is provided according to claim 11.

The invention is also directed to a method by which the described device operates and including method steps for carrying out every function of the device according to the third aspect of the invention as specified in claim 12 and the associated subclaims 13-16.

### BRIEF DESCRIPTION OF THE DRAWINGS

Embodiments of the invention will be explained, by way of example only, in greater detail by the following detailed description of advantageous embodiments thereof with reference to the accompanying drawing figures.
- Figure 1: is a block diagram that schematically illustrates the transmission of the rotary motion according to an embodiment of the invention.
- Figures 2a-2d: schematically illustrate the mode of operation of the energy accumulation member and the intermediate body connected thereto.
- Figure 3: illustrates in detail an embodiment of the energy accumulation member and the intermediate body.

### DESCRIPTION OF THE PREFERRED EMBODIMENTS

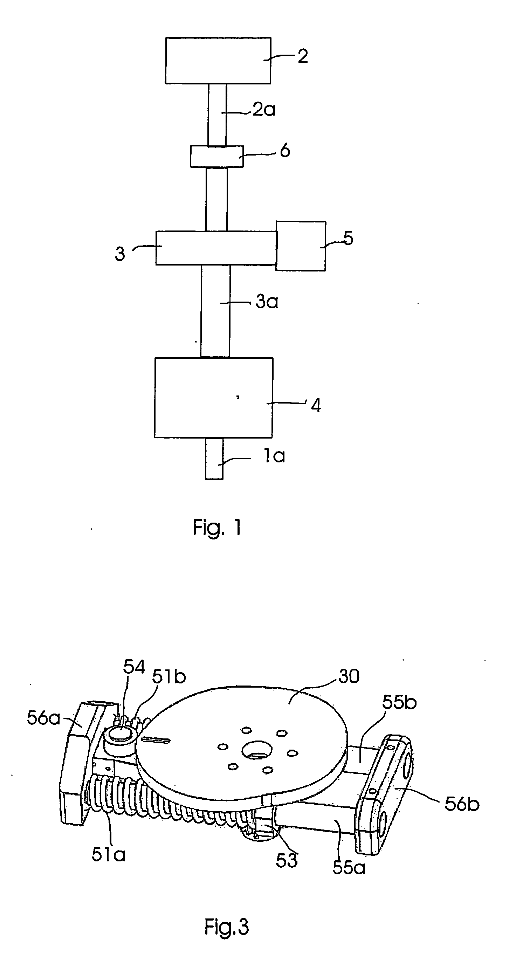

Figure 1 is a block diagram that schematically illustrates the mechanical coupling of the operating members that brings about the movement of the components of a diverter switch or a tap changer.

An input drive shaft la is connected to a axis of rotation 3a via a motion-transforming member 4. The input drive shaft 1a is of such a nature that, when operated, it may rotate in one or the other direction. The motion-transforming member 4 is designed such that a rotary motion is always imparted to the axis of rotation 3a in one and the same direction irrespective of in which direction the input drive shaft 1a is rotated. The drive source for the input drive shaft la is the drive shaft that operates a diverter selector switch (not shown) in a transformer, that is, the mechanism that sets the connections to new tap points in the winding of a transformer when a change of voltage is to take place. The input drive shaft la of the diverter selector switch rotates in different directions in dependence on whether it is a question of increasing or reducing the voltage of the transformer. The output axis of rotation 3a is connected to an intermediate body 3 and to an associated energy accumulation member 5 as well as a driven body 2 with a drive shaft 2a. The body 2, in its turn, drives contacts (not shown here) of the diverter switch. These may be of a kind described in greater detail in WO 2006/004527.

The motion-transforming member 4 may, for example, be either of the kind described in the patent application WO 2006/004527 or of the kind described in the patent application WO 2006/050552.

When the axis of rotation 3a is rotated, it feeds energy into the mechanical energy accumulation member 5 via an intermediate body 3. After a definite angular motion of the axis of rotation, the accumulated energy is released to the intermediate body which rotates the drive shaft 2a rapidly and powerfully and thus imparts a rotary motion to the driving body 2, said rotary motion influencing the components of the diverter switch which are described in detail in the above-mentioned WO 2006/004527. A gear change (not shown) may be arranged between the motion-transforming member 4 and the axis of rotation 3a, so that the movement of the 3a is preferably four times as large as the movement of the motion-transforming member.

A freewheel 6 is arranged on the drive shaft 2a, the function of said freewheel being to allow rotation of the intermediate body in one direction but to block rotation in the other direction, thus ensuring that the driving motion is not reversed. The freewheel may be of any conventional kind, that is, be in the form of a ratchet gearing that transmits torque in one direction but freewheels in the other direction.

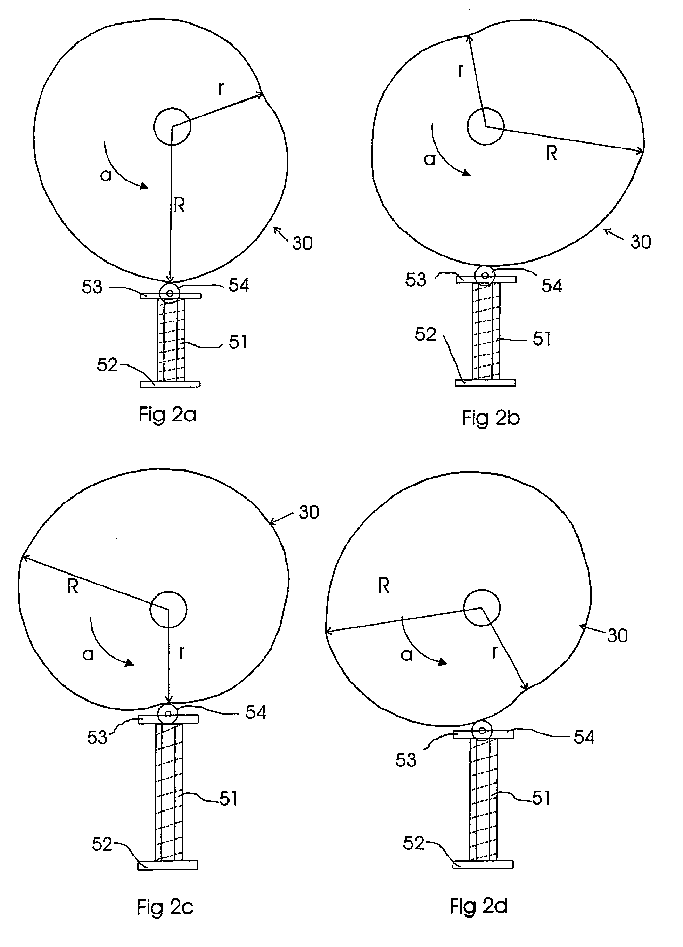

According to an embodiment of the invention, the intermediate body 3 comprises a cam-shaped driving pulley 30 and the mechanical energy accumulation member 5 is designed as a tensile/compressive spring unit 51, which will be described in greater detail with reference to Figures 2a-2d and Figure 3.

Figures 2a to 2d show schematically the mode of operation of the tensile/compressive spring unit 51 in cooperation with the driving pulley 30. The driving pulley is designed with a largest diameter R and a smallest diameter r. The tensile/- compressive spring unit 51 is connected at one end to a fixed yoke 52 and a movable yoke 53. The movable yoke 53 is provided with a rolling device 54 making contact with the periphery of the driving pulley 30. The movable yoke 53 is adapted to run in a radial direction and parallel to the plane of the driving pulley. This will cause the spring forces to be directed perpendicular to the axis of rotation of the driving pulley, which thus substantially absorbs radially directed forces. The movable yoke 53 moves with a length of stroke corresponding to R-r while the driving pulley rotates one turn about its axis. The direction of rotation of the driving pulley is shown by the arrow a.

In Figure 2a, the driving pulley is in a position where the rolling device 54 with the movable yoke makes contact with the periphery of the driving pulley where the driving pulley exhibits its largest radius R. In this position, the spring unit 51 is charged with maximum mechanical energy. This constitutes the starting position for a driving motion of the driving body 2.

Figure 2b shows a position where the mechanical energy stored in the spring unit imparts an accelerating motion to the driving pulley via the drive roll 54. From the starting position at radius R, the driving pulley has here been driven approximately 90°.

Figure 2c shows the position for the driving pulley when the drive roll reaches the smallest radius r of the driving pulley. In this position, the intended part of the mechanical energy stored in the spring unit has been transmitted to the driving pulley. In this position, the driving pulley has moved approximately two-thirds of a turn, or 240° from the position 2a. In this position, the spring unit also has a certain prestress, thus ensuring the abutment of the drive roll against the driving pulley.

When the driving pulley has passed the position according to Figure 2c, no more energy can be transmitted from the spring unit. Since the radius of the driving pulley is increasing, this implies that the roll with the movable yoke during after the position of Figure 2c compresses the spring unit which thus receives mechanical energy. This energy is taken from the mechanical motion torque of the driving pulley and parts mechanically connected thereto. This entails a braking of the driving pulley.

Figure 2d shows a position where the driving pulley has delivered its kinetic energy to the spring unit and has been braked to a stop position where the speed of the driving pulley is zero. Because of the engagement of the freewheel, the driving pulley cannot change its direction of rotation either.

In this position, the driving pulley assumes a wait state before the next operation. This is initiated when the input shaft 1a, via the motion-transforming member 4 and the axis of rotation 3a, gives the driving pulley a driving motion. While the driving pulley is rotated to its initial position in Figure 2a, the spring unit is again charged with full mechanical energy, whereby a full turn has been completed.

When the driving pulley has reached the position according to Figure 2a, where the driving pulley makes contact with the drive roll with its largest diameter R, the new driving motion is spontaneously initiated by the driven body 2. Thus no separate release member is needed to initiate the driving motion of the driving pulley.

It is realized that it is possible, within the scope of the invention, to influence the different processes above, namely, the driving of the driving pulley from the spring unit, the braking of the driving pulley by the transmission of kinetic energy from the driving pulley to the spring unit, and the tensioning of the spring unit to its initial position, by appropriately dimensioning the cam shape. By adapting the shape of the driving pulley, it is thus realized that it is possible to influence both the acceleration and deceleration processes of the driving pulley. Preferably, the shape of the driving pulley is of such a nature that it is adapted to the load and hence imparts to the driven body 2 a uniform speed after a short acceleration process.

Also, no separate braking devices for the driving pulley need be arranged, since its remaining kinetic energy is automatically returned to the spring unit and the energy balance implies that the driving pulley, due to any friction losses, independently of the original storing of mechanical energy by the spring unit, always rotates less than one turn. This entails considerable advantages, especially when testing and adjusting the drive system, since the process will be automatically controllable also in the event that, for example, the driving body 2 is disengaged from a subsequent diverter switch. Also in a test position, where the driving body is disengaged from the driving pulley, it will exhibit a controlled motion pattern.

When the driving pulley moves between the positions shown in Figures 2a and 2c, the spring 51 gives off energy, and when the driving pulley moves between the positions shown in Figures 2c and 2d, the spring 51 stores energy.

Figure 3 shows an alternative embodiment of the spring unit. Two guides 55a and 55b, respectively, which are arranged in parallel, are secured at their ends to attachments 56a and 56b. Two springs 51a and 51b are each arranged to run along a respective guide. The springs are secured to the attachment 56a, which thus serves as a fixed yoke. The other end of the respective spring is secured to a common movable yoke 53, which in turn is arranged to run parallel to the guides. A roll 54 is connected to the yoke 53 and makes contact with the driving pulley 30. In this case, the spring unit is charged with mechanical energy when the springs are tensioned to maximum position, which occurs when the roll 54 contacts the driving pulley at its largest diameter R.

According to one embodiment, the largest radius of the driving pulley is between 80 mm and 120 mm, preferably 105 mm, and its smallest radius is between 50 mm and 80 mm, preferably 60 mm. The difference between the largest radius R and the smallest radius r may be between 30 mm and 60 mm, preferably 45 mm.

According to one embodiment, the force of the rolling device against the driving pulley is between 1000 N and 1500 N, and the speed of rotation of the driving pulley is adapted to vary from 0 to 25 rad/s. The time from start to stop of the driving pulley may in this case be 0.2 s.

In the figures the rolling device is designed as a ball-bearing roller, which gives low friction and a large contact surface against the periphery of the driving pulley. According to one embodiment, the roller is a needle bearing. Alternatively, the rolling device may be designed as a spherical ball, rotatably arranged in a ball cage. To minimize the surface pressure against the periphery of the driving pulley, it is suitable in this case to give its cross section a corresponding circular cross-section shape.

The device is suitably surrounded by transformer oil, which serves both as lubrication and cooling of the mechanical components included in the device.

The method of transmitting the driving motion may be summarized in the following operating steps:
a) the rolling device 54 imparts to the driving pulley 30 a rotary motion while the rolling device is running from the largest radius R of the driving pulley to its smallest radius r while transmitting the rotary motion to the drive shaft 2a and the driven body 2,
b) the rotary motion of the driving pulley 30 is braked to 0 while the kinetic energy of the driving pulley is transmitted to the tensile/compressing spring unit 51,
c) the driving pulley 30 is maintained stationary with the aid of a freewheel 6, which by means of a ratchet gearing prevents the driving pulley from changing its direction of rotation,
d) the input shaft la imparts to the driving pulley 30 a rotary motion via the axis of rotation 3a, while the rolling device is running from the stationary position of the driving pulley till the largest radius R of the driving pulley reaches the rolling device, whereby the operating step a) starts instantaneously.

The device can be immersed in dielectric fluid with similar properties as transformer oil.

## Claims

1. A device for transmitting rotary motion to a body (2) driven about an drive shaft (2a) via a motion-transmitting member that comprises an intermediate body (3) connected to and rotatable about an axis of rotation (3a), a mechanical energy accumulation member (5) in the form of a spring device adapted to receive energy from the axis of rotation (3a), and means for transmitting mechanical energy accumulated in the spring device to the driven body (2) via the drive shaft (2a), the intermediate body (3) comprises a cam-shaped driving pulley (30) interacting with the energy accumulation member (5),
**characterized in that** the spring device of the energy accumulating member (5) comprises a tensile/compressive spring unit (51) connected to a fixed yoke (52) and a movable yoke (53), the movable yoke (53) is provided with a rolling device (54) making contact with the periphery of the driving pulley (30).

2. A device according to claim 1, **characterized in that** the movable yoke (53) is adapted to run in a radial direction and parallel to the plane of the driving pulley (30) with a length of stroke corresponding to R-r,
the tensile/compressive spring unit (51) is adapted to receive energy from the driving pulley during the movement of the movable yoke (53) from the position at the smallest radius r to the largest radius R,
the tensile/compressive spring unit (51) is adapted to give off energy to the driving pulley during the movement of the movable yoke (53) from the position at the largest radius R to the smallest radius r.

3. A device according to claim 1-2, **characterized in that** the a freewheel (6) is adapted to allow the driving pulley (30) a rotary motion in one direction.

4. A device according to claim 1-3, **characterized in that** the axis of rotation (3a) is adapted to be driven by an alternating rotary motion of a input drive shaft (1a), whereby the device comprises a motion-transforming member (4) for transforming the alternating rotary motion of the drive shaft (1a) into a unidirected rotary motion of the axis of rotation (3a).

5. A device according to claims 1-4, **characterized in that** the driving pulley (30) exhibits an angle between the largest radius R and the smallest radius r of the driving pulley (30) of between 220° and 270°, preferably 240°.

6. A device according to claims 1-5, **characterized in that** the rolling device (54) is adapted to make contact with the driving pulley with a spring force of between 1000 N and 1500 N.

7. A device according to claims 1-6, **characterized in that** the intermediate body (3) and the energy accumulation member (5) constitute an integrated part.

8. A device according to claims 1-7, **characterized in that** the input drive shaft (1a) and the drive shaft (2a) are parallel.

9. A device according to claims 1-8, **characterized in that** the driven body (2) is mechanically connected to operating means for contacts of an on-load tap changer in a transformer or a reactor.

10. Use of a device according to any of claims 1-9 for transmission of rotary motion from a driving body to a driven body, in which the driven body is adapted to operate contacts of an on-load tap changer in a transformer or reactor.

11. A method of transmitting a rotary motion to a body (2) driven by a drive shaft (2a) from an intermediate body (3) connected to and rotatable about an axis of rotation (3a) by transmitting mechanical energy from the axis of rotation (3a) to a mechanical energy accumulation member (5) in the form of a spring device and by transmitting accumulated mechanical energy in the spring device to the drive shaft (2a), **characterized in that** the mechanical energy is transmitted to and from the energy accumulation member via the intermediate body (3), which is designed as a rotating cam-shaped driving pulley (30) that drives, or is driven by, a rolling device (54) that is mechanically connected to a movable end of a spring device designed as a tensile/compressive spring unit (51).

12. A method of transmitting a driving motion according to claim 11, **characterized in that** it comprises the following operating steps:
a)the rolling device (54) imparts to the driving pulley (30) a rotary motion while the rolling device is running from the largest radius R of the driving pulley to its smallest radius r while transmitting the rotary motion to the drive shaft (2a) and the driven body (2),
b)the rotary motion of the driving pulley (30) is braked to 0 while the kinetic energy of the driving pulley is transmitted to the tensile/compressing spring unit (51),
c) the driving pulley (30) is maintained stationary with the aid of a freewheel (6), which by means of a ratchet gearing prevents the driving pulley from changing its direction of rotation,
d) the axis of rotation (3a) imparts to the driving pulley (30) a rotary motion while the rolling device is running from the stationary position of the driving pulley to the largest radius R of the driving pulley reaches the rolling device, whereby the operating step a) starts instantaneously.

13. A method of transmitting a driving motion according to claim 11-12, **characterized in that** the axis of rotation (3a) is driven by a input drive shaft (1a) via a motion-transmitting member (4) and transforms an alternating rotary motion of the input drive shaft (1a) into a unidirected rotary motion.

14. A method of transmitting a driving motion according to claim 12-13, **characterized in that** the operating steps a)-b) occur within a time interval of a length of about 0.2 s.

15. A method of transmitting a driving motion according to claims 11-14, **characterized in that** the driven body (2) operates the contacts of an on-load tap changer in a transformer or a reactor.

## Patentansprüche

1. Vorrichtung zum Übertragen von Drehbewegung auf einen Körper (2), der um eine Antriebswelle (2a) angetrieben wird, über ein Bewegung übertragendes Element, das einen Zwischenkörper (3), der mit einer Drehachse (3a) verbunden und um dieselbe drehbar ist, ein Mechanische-Energieakkumulationselement (5) in der Form einer Federvorrichtung, die dafür eingerichtet ist, Energie von der Drehachse (3a) aufzunehmen, und Mittel zum Übertragen von in der Federvorrichtung akkumulierter mechanischer Energie auf den angetriebenen Körper (2) über die Antriebswelle (2a) umfasst, wobei der Zwischenkörper (3) eine nockenförmige Antriebsscheibe (30) umfasst, die in eine Wechselwirkung mit dem Energieakkumulationselement (5) tritt,
**dadurch gekennzeichnet, dass** die Federvorrichtung des Energieakkumulationselementes (5) eine Zug-/Druckfedereinheit (51) umfasst, die mit einem unbeweglichen Joch (52) und einem beweglichen Joch (53) verbunden ist, wobei das bewegliche Joch (53) mit einer rollenden Vorrichtung (54) versehen ist, die Kontakt mit dem Umfang der Antriebsscheibe (30) herstellt.

2. Vorrichtung nach Anspruch 1, **dadurch gekennzeichnet, dass** das bewegliche Joch (53) dafür eingerichtet ist, in einer radialen Richtung und parallel zu der Ebene der Antriebsscheibe (30) zu laufen, wobei eine Hublänge R-r entspricht,
die Zug-/Druckfedereinheit (51) dafür eingerichtet ist, während der Bewegung des beweglichen Jochs (53) von der Position an dem kleinsten Radius r zu dem größten Radius R, Energie von der Antriebswelle aufzunehmen,
die Zug-/Druckfedereinheit (51) dafür eingerichtet ist, während der Bewegung des beweglichen Jochs (53) von der Position an dem größten Radius R zu dem kleinsten Radius r, Energie an die Antriebswelle abzugeben.

3. Vorrichtung nach Anspruch 1-2, **dadurch gekennzeichnet, dass** ein Freilauf (6) dafür eingerichtet ist, der Antriebsscheibe (30) eine Drehbewegung in einer Richtung zu erlauben.

4. Vorrichtung nach Anspruch 1-3, **dadurch gekennzeichnet, dass** die Drehachse (3a) dafür eingerichtet ist, durch eine abwechselnde Drehbewegung einer Eingangsantriebswelle (1a) angetrieben zu werden, wobei die Vorrichtung ein Bewegung umformendes Element (4) für Umformen der abwechselnden Drehbewegung der Antriebswelle (1a) in eine unidirektionale Drehbewegung der Drehachse (3a) umfasst.

5. Vorrichtung nach Anspruch 1-4, **dadurch gekennzeichnet, dass** die Antriebsscheibe (30) einen Winkel zwischen dem größten Radius R und dem kleinsten Radius r der Antriebsscheibe (30) von zwischen 220° und 270°, vorzugsweise 240°, zeigt.

6. Vorrichtung nach Anspruch 1-5, **dadurch gekennzeichnet, dass** die rollende Vorrichtung (54) dafür eingerichtet ist, mit einer Federkraft von zwischen 1000 N und 1500 N Kontakt mit der Antriebsscheibe herzustellen.

7. Vorrichtung nach Anspruch 1-6, **dadurch gekennzeichnet, dass** der Zwischenkörper (3) und das Energieakkumulationselement (5) ein integrales Teil darstellen.

8. Vorrichtung nach Anspruch 1-7, **dadurch gekennzeichnet, dass** die Eingangsantriebswelle (1a) und die Antriebswelle (2a) parallel sind.

9. Vorrichtung nach Anspruch 1-8, **dadurch gekennzeichnet, dass** der angetriebene Körper (2) mit Betätigungsmittel für Kontakte eines Last-Stufenumschalters in einem Transformator oder einem Reaktor mechanisch verbunden ist.

10. Verwendung einer Vorrichtung nach einem der Ansprüche 1-9 zur Übertragung von Drehbewegung von einem antreibenden Körper auf einen angetriebenen Körper, wobei der angetriebene Körper dafür eingerichtet ist, Kontakte eines Last-Stufenumschalters in einem Transformator oder Reaktor zu betätigen.

11. Verfahren zum Übertragen einer Drehbewegung auf einen Körper (2), der durch eine Antriebswelle (2a) angetrieben wird, von einem Zwischenkörper (3), der mit einer Drehachse (3a) verbunden und um dieselbe drehbar ist, durch das Übertragen von mechanischer Energie von der Drehachse (3a) auf ein Mechanische-Energieakkumulationselement (5) in der Form einer Federvorrichtung und durch Übertragen von akkumulierter mechanischer Energie in der Federvorrichtung auf die Antriebswelle (2a) **dadurch gekennzeichnet, dass** die mechanische Energie zu und von dem Energieakkumulationselement übertragen wird über den Zwischenkörper (3), der als eine sich drehende nockenförmige Antriebsscheibe (30) ausgelegt ist, die eine rollende Vorrichtung (54) antreibt oder durch dieselbe angetrieben wird, die mit einem beweglichen Ende einer Federvorrichtung mechanisch verbunden ist, die als eine Zug-/Druckfedereinheit (51) ausgelegt ist.

12. Verfahren zum Übertragen einer Antriebsbewegung nach Anspruch 11, **dadurch gekennzeichnet, dass** es die folgenden Betriebsschritte umfasst:
a) die rollende Vorrichtung (54) verleiht der Antriebsscheibe (30) eine Drehbewegung, während die rollende Vorrichtung von dem größten Radius R der Antriebsscheibe zu deren kleinstem Radius r läuft, während die Drehbewegung auf die Antriebswelle (2a) und den angetriebenen Körper (2) übertragen wird,
b) die Drehbewegung der Antriebsscheibe (30) wird auf 0 abgebremst, während die kinetische Energie der Antriebsscheibe auf die Zug-/Druckfedereinheit (51) übertragen wird,
c) die Antriebsscheibe (30) wird mit der Hilfe eines Freilaufs (6) unbeweglich gehalten, der mittels eines Sperrklinkenmechanismus verhindert, dass die Antriebsscheibe ihre Drehrichtung ändert,
d) die Drehachse (3a) verleiht der Antriebsscheibe (30) eine Drehbewegung, während die rollende Vorrichtung von der unbeweglichen Position der Antriebsscheibe läuft, bis der größte Radius der Antriebsscheibe die rollende Vorrichtung erreicht, wodurch unverzüglich der Betriebsschritt a) beginnt.

13. Verfahren zum Übertragen einer Antriebsbewegung nach Anspruch 11-12, **dadurch gekennzeichnet, dass** die Drehachse (3a) durch eine Eingangsantriebswelle (1a) über ein Bewegung umformendes Element (4) angetrieben wird und eine abwechselnde Drehbewegung der Eingangsantriebswelle (1a) in eine unidirektionale Drehbewegung umwandelt.

14. Verfahren zum Übertragen einer Antriebsbewegung nach Anspruch 12-13, **dadurch gekennzeichnet, dass** die Betriebsschritte a)-b) innerhalb eines Zeitraumes mit einer Länge von etwa 0,2 s erfolgen.

15. Verfahren zum Übertragen einer Antriebsbewegung nach Anspruch 11-14, **dadurch gekennzeichnet, dass** der angetriebene Körper (2) die Kontakte eines Last-Stufenumschalters in einem Transformator oder einem Reaktor betätigt.

## Revendications

1. Dispositif de transmission d'un mouvement de rotation à un corps (2) entraîné autour d'un arbre d'entraînement (2a) par l'intermédiaire d'un élément de transmission de mouvement qui comprend un corps intermédiaire (3) connecté à et rotatif autour d'un axe de rotation (3a), un élément d'accumulation d'énergie mécanique (5) sous la forme d'un dispositif à ressort adapté pour recevoir de l'énergie de l'axe de rotation (3a), et un moyen pour transmettre l'énergie mécanique accumulée dans le dispositif à ressort au corps entraîné (2) par l'intermédiaire de l'arbre d'entraînement (2a), le corps intermédiaire (3) comprend une poulie d'entraînement en forme de came (30) interagissant avec l'élément d'accumulation d'énergie (5),
**caractérisé en ce que** le dispositif à ressort de l'élément d'accumulation d'énergie (5) comprend une unité de ressort de traction/compression (51) connectée à un étrier fixe (52) et un étrier mobile (53), l'étrier mobile (53) étant pourvu d'un dispositif de roulement (54) établissant un contact avec la périphérie de la poulie d'entraînement (30).

2. Dispositif selon la revendication 1, **caractérisé en ce que** l'étrier mobile (53) est adapté pour se déplacer dans une direction radiale et parallèle au plan de la poulie d'entraînement (30) avec une longueur de course correspondant à R-r,
l'unité de ressort de traction/compression (51) est adaptée pour recevoir de l'énergie de la poulie d'entraînement pendant le mouvement de l'étrier mobile (53) de la position ayant le plus petit rayon r à la position ayant le plus grand rayon R,
l'unité de ressort de traction/compression (51) est adaptée pour transmettre de l'énergie à la poulie d'entraînement pendant le mouvement de l'étrier mobile (53) de la position ayant le plus grand rayon R à la position ayant le plus petit rayon r.

3. Dispositif selon la revendication 1 ou 2, **caractérisé en ce qu'**une roue libre (6) est adaptée pour permettre à la poulie d'entraînement (30) de suivre un mouvement de rotation dans une direction.

4. Dispositif selon les revendications 1 à 3, **caractérisé en ce que** l'axe de rotation (3a) est adapté pour être entraîné par un mouvement de rotation alternatif d'un arbre de transmission d'entrée (1a), dans lequel le dispositif comprend un élément de transformation de mouvement (4) pour transformer le mouvement de rotation alternatif de l'arbre de transmission (1a) en un mouvement de rotation unidirectionnel de l'axe de rotation (3a).

5. Dispositif selon les revendications 1 à 4, **caractérisé en ce que** la poulie d'entraînement (30) présente un angle entre le plus grand rayon R et le plus petit rayon r de la poulie d'entraînement (30) valant de 220° à 270°, de préférence 240°.

6. Dispositif selon les revendications 1 à 5, **caractérisé en ce que** le dispositif de roulement (54) est adapté pour établir un contact avec la poulie d'entraînement avec une tension comprise entre 1000 N et 1500 N.

7. Dispositif selon les revendications 1 à 6, **caractérisé en ce que** le corps intermédiaire (3) et l'élément d'accumulation d'énergie (5) constituent une pièce intégrée.

8. Dispositif selon les revendications 1 à 7, **caractérisé en ce que** l'arbre de transmission d'entrée (1a) et l'arbre d'entraînement (2a) sont parallèles.

9. Dispositif selon les revendications 1 à 8, **caractérisé en ce que** le corps entraîné (2) est connecté de façon mécanique à un moyen d'actionnement pour les contacts d'un commutateur de prise en charge dans un transformateur ou un réacteur.

10. Utilisation d'un dispositif selon l'une quelconque des revendications 1 à 9 pour la transmission d'un mouvement de rotation d'un corps d'entraînement à un corps entraîné, dans laquelle le corps entraîné est adapté pour actionner les contacts d'un commutateur de prise en charge dans un transformateur ou un réacteur.

11. Procédé de transmission d'un mouvement de rotation à un corps (2) entraîné par un arbre d'entraînement (2a) depuis un corps intermédiaire (3) connecté à et rotatif autour d'un axe de rotation (3a) en transmettant de l'énergie mécanique de l'axe de rotation (3a) à un élément d'accumulation d'énergie mécanique (5) sous la forme d'un dispositif à ressort et en transmettant l'énergie mécanique accumulée dans le dispositif à ressort à l'arbre d'entraînement (2a), **caractérisé en ce que** l'énergie mécanique est transmise à et depuis l'élément d'accumulation d'énergie via le corps intermédiaire (3), qui se présente sous la forme d'une poulie d'entraînement en forme de came rotative (30) qui entraîne, ou est entraînée par, un dispositif de roulement (54) qui est connecté de façon mécanique à une extrémité mobile d'un dispositif à ressort se présentant sous la forme d'une unité de ressort de traction/compression (51).

12. Procédé de transmission d'un mouvement de rotation selon la revendication 11, **caractérisé en ce qu'**il comprend les étapes de fonctionnement suivantes :
a) le dispositif de roulement (54) imprime à la poulie d'entraînement (30) un mouvement de rotation quand le dispositif de roulement va du plus grand rayon R de la poulie d'entraînement à son plus petit rayon r tout en transmettant le mouvement de rotation à l'arbre d'entraînement (2a) et au corps entraîné (2),
b) le mouvement de rotation de la poulie d'entraînement (30) est freiné jusqu'à l'arrêt tandis que l'énergie cinétique de la poulie d'entraînement est transmise à l'unité de ressort de traction/compression (51),
c) la poulie d'entraînement (30) est maintenue statique à l'aide d'une roue libre (6), laquelle empêche la poulie d'entraînement de changer de sens de rotation grâce à un dispositif à cliquet,
d) l'axe de rotation (3a) imprime à la poulie d'entraînement (30) un mouvement de rotation quand le dispositif de roulement va de la position statique de la poulie d'entraînement au plus grand rayon R de la poulie d'entraînement et atteint le dispositif de roulement, moyennant quoi l'étape de fonctionnement a) démarre instantanément.

13. Procédé de transmission d'un mouvement de rotation selon la revendication 11 ou 12, **caractérisé en ce que** l'axe de rotation (3a) est entraîné par un arbre de transmission d'entrée (1a) via un élément de transformation de mouvement (4) et transforme un mouvement de rotation alternatif de l'arbre de transmission d'entrée (1a) en un mouvement de rotation unidirectionnel.

14. Procédé de transmission d'un mouvement de rotation selon la revendication 12 ou 13, **caractérisé en ce que** les étapes de fonctionnement a) et b) sont exécutées dans un intervalle de temps ayant une longueur d'environ 0,2 s.

15. Procédé de transmission d'un mouvement de rotation selon les revendications 11 à 14, **caractérisé en ce que** le corps entraîné (2) actionne les contacts d'un commutateur de prise en charge dans un transformateur ou un réacteur.
